(19) **Europäisches Patentamt**

**European Patent Office**

**Office européen des brevets**

(11) Publication number: **0 201 669**
**B1**

(12) **EUROPEAN PATENT SPECIFICATION**

(45) Date of publication of patent specification: **17.01.90**

(21) Application number: **86102018.8**

(22) Date of filing: **17.02.86**

(51) Int. Cl.⁵: **H 05 B 7/06,** F 27 B 14/06,
F 27 D 1/00, F 27 D 11/08,
C 04 B 35/02

(54) Direct current arc furnace or ladle.

(30) Priority: **21.02.85 SE 8500837**

(43) Date of publication of application:
**20.11.86 Bulletin 86/47**

(45) Publication of the grant of the patent:
**17.01.90 Bulletin 90/03**

(84) Designated Contracting States:
**DE FR GB IT**

(56) References cited:
**FR-A-1 517 349**
**FR-A-2 292 397**
**FR-A-2 537 261**
**GB-A-2 042 309**
**US-A-3 329 514**
**US-A-4 454 239**

(73) Proprietor: **ASEA AB**
**S-721 83 Västeras (SE)**

(72) Inventor: **Rappinger, Bo**
**Sandgärdsgatan 6**
**S-723 36 Västeras (SE)**
Inventor: **Stenkvist, Sven-Einar**
**Ormbergssvängen 10**
**S-724 62 Västeras (SE)**

(74) Representative: **Boecker, Joachim, Dr.-Ing.**
**Rathenauplatz 2-8**
**D-6000 Frankfurt a.M. 1 (DE)**

Courier Press, Leamington Spa, England.

## Description

The invention relates to a direct current arc furnace or ladle according to the precharacterising part of claim 1.

In the hearth electrode connection or the connection part of a direct current arc furnace FR—A—2537261, which is to be electrically conductive, magnesite graphite bricks, tempered at 150—350°C, have been used so far. With these bricks the current density must be adapted such that no electric overheating will take place irrespective of whether the resistivity for a certain type of brick will drop during operation and with increasing temperature.

The invention aims at a direct current arc furnace or ladle of the above-mentioned kind in which the afore-mentioned disadvantage and other problems associated therewith are eliminated.

To achieve this aim the invention suggests a direct current arc furnace or ladle according to the introductory part of claim 1, which is characterized by the features of the characterizing part of claim 1.

Further developments of the invention are characterized by the features of the additional claims.

The teaching of the invention results in a lower resistivity of the laid bricks, and this enables the use of bricks having a lower carbon content and thus a lower thermal conductivity. In this way it is possible to utilize a higher current density and/or a thinner bottom in a d.c. arc furnace according to the invention.

With a heat treatment at a temperature in excess of 350°C (suitably 350 to about 1000°C), volatile components escape and coking occurs to a varying degree depending on the type of binder used. The heat treatment and the coking should preferably take place in a reducing atmosphere, that is an atmosphere of low oxygen content.

Certain processes require the putting in service of a newly bricked, cold bottom lining with a rapid application of full bottom electrode current. A graphite-containing brick, heat-treated in excess of 350°C, for example magnesite graphite brick, dolomite graphite brick, chamotte graphite brick, silicon carbide graphite brick or aloxide graphite brick, has a lower resistivity, which results in the following advantages:

1. With the same furnace and brick type, the maximum current load can be increased, or

2. With the same furnace and brick type, the conducting bottom areas can be reduced, or

3. With the same furnace and current load, bricks having a lower graphite content can be used, which means

a) reduced thermal conductivity and the possibility of thinner bottom constructions;

b) reduced risk of recarborization of the melt;

c) reduced oxidation and erosion of the bottom.

The use of bricks according to the invention is especially suitable in the rear lining of the bottom where, during operation, the temperature is not high enough for coking.

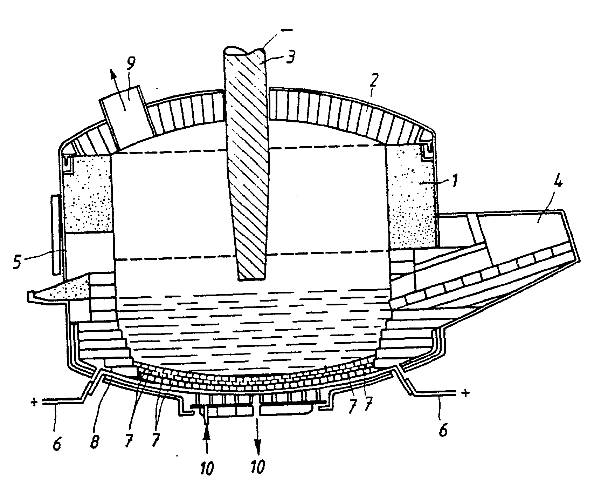

The invention will now be described by way of example with reference to the single Figure, which shows a furnace according to the invention.

The furnace vessel 1 is provided with a furnace roof 2 and one (or more) negatively connected arcing electrodes 3. The electrode 3 is thus a cathode. 4 designates a tapping spout and 5 a slagging door. The hearth connection 6 is anodically connected. A number of bricks 7 are arranged in the hearth connection 6, which contain graphite and which according to the invention have been heat-treated at a temperature in excess of 350°C prior to laying, whereby volatile components have at least partially escaped and coking has occurred, resulting in a lower electrical resistivity of these bricks 7. These bricks 7 may possibly be mixed with electrically non-conductive but better heat insulating bricks, such as graphite-free magnesite or aloxide bricks, or chamotte. The lower part of the hearth connection 6 consists as usual of an electrically conducting metallic part which is possibly liquid-cooled as indicated by the arrows 10. 9 designates an inspection or sampling opening, possibly a smoke exhaust means.

The arrangement according to the foregoing description can be varied in many ways within the scope of the disclosed inventive idea. Thus, for example the bottom portion may possibly be fancooled from below, either alone or in combination with the liquid cooling at 10.

## Claims

1. Direct current arc furnace or ladle having at least one arcing electrode (3) and at least one hearth electrode connection (6—8), the latter comprising graphite-containing bricks (7), characterized in that said graphite-containing bricks (7), prior to laying, have been heat-treated at a temperature in excess of 350°C, whereby volatile components have at least partially escaped and coking has occurred to obtain a lower electrical resistivity of the bricks in comparison with untreated bricks or bricks treated at a lower temperature.

2. Furnace according to claim 1, characterized in that the bricks (7) in the hearth connection, prior to laying, have been heat-treated at a temperature of between 350°C and approximately 1000°C.

3. Furnace according to any of claims 1 and 2, characterized in that the bricks (7) consist of magnesite graphite bricks, dolomite graphite bricks, chamotte graphite bricks, silicon carbide graphite bricks, or aloxide graphite bricks.

4. Furnace according to any of the preceding claims, characterized in that the heat-treated bricks (7) are laid alternately with electrically non-conducting but better heat-insulating bricks, such as graphite-free magnesite or aloxide bricks or chamotte.

## Patentansprüche

1. Gleichstromlichtbogenofen oder -pfanne mit mindestens einer Lichtbogenelektrode (3) und mindestens einem Herd-Elektrodenanschluß (6—8), welcher graphithaltige Ziegel (7) enthält, dadurch gekennzeichnet, daß die genannten graphithaltigen Ziegel (7) vor ihrer Verlegung bei einer Temperatur oberhalb von 360°C wärmebehandelt worden sind, wobei flüchtige Komponenten zumindest teilweise verflüchtigt sind und ein Verkoken stattgefunden hat, um einen elektrischen Widerstand der Ziegel zu erhalten, der im Vergleich zu unbehandelten Ziegeln oder bei einer geringeren Temperatur behandelten Ziegeln kleiner ist.

2. Ofen nach Anspruch 1, dadurch gekennzeichnet, daß die Ziegel (7) des Herdanschlusses vor ihrer Verlegung bei einer Temperatur zwischen 350°C und etwa 1000°C wärmebehandelt wurden.

3. Ofen nach einem der Ansprüch 1 und 2, dadurch gekennzeichnet, daß die Ziegel (7) aus Magnesit-Graphit, Dolomit-Graphit, Schamotte-Graphit, Siliziumcarbit-Graphit oder Al-Oxyd-Graphit bestehen.

4. Ofen nach einem der vorhergehenden Ansprüche, dadurch gekennzeichnet, daß die wärmebehandelten Ziegel (7) abwechselnd mit elektrisch nicht leitenden, aber besser wärmeisolierenden Ziegeln verlegt sind, wie z.B. graphitfreien Magnesium- oder Al-Oxyd-Ziegeln oder Schamotte.

**Revendications**

1. Four à arc ou poche de coulée à courant continu comportant au moins une électrode (3) produisant un arc, et au moins une connexion d'électrode de sole (6—8), cette dernière comprenant des briques contenant du graphite (7), caractérisé en ce que avant d'être posées, les briques contenant du graphite (7) ont été soumises à un traitement thermique à une température supérieure à 350°C grâce à quoi des composants volatils se sont au moins partiellement échappés et une cokéfaction à eu lieu, pour obtenir une plus faible résistivité électrique des briques, en comparaison avec des briques non traitées ou des briques traitées à une température inférieure.

2. Four selon la revendication 1, caractérisé en ce que les briques (7) qui font partie de la connexion de sole ont subi un traitement thermique, avant d'être posées, à une température comprise entre 350°C et environ 1000°C.

3. Four selon l'une quelconque des revendications 1 et 2, caractérisé en ce que les briques (7) consistent en briques de magnésite-graphite, en briques de dolomite-graphite, en briques de chamotte-graphite, en briques de carbure de silicium-graphite, ou en briques d'oxyde d'aluminium-graphite.

4. Four selon l'une quelconque des revendications précédentes, caractérisé en ce que les briques (7) qui ont subi le traitement thermique sont posées en alternance avec des briques non conductrice de l'électricité mais ayant de meilleures propritétés d'isolation thermique, telles que des briques de magnésite, doxyde d'aluminium ou de chamotte ne contenant pas de graphite.